# EUROPÄISCHE PATENTSCHRIFT

(11) **EP 2 269 769 B1**
(45) Veröffentlichungstag und Bekanntmachung des Hinweises auf die Patenterteilung: **14.11.2012**
(21) Anmeldenummer: 10006578.8
(22) Anmeldetag: 24.06.2010
(51) Int. Cl.: B23Q 3/155

(54) **Werkzeugmaschine mit einer Werkzeugwechselvorrichtung**
Machine tool with a tool exchange device
Machine-outil dotée d'un dispositif de changement d'outil

(30) Priorität: 29.06.2009 DE 102009031202
(43) Veröffentlichungstag der Anmeldung: 05.01.2011
(73) Patentinhaber: Grob-Werke GmbH & Co. KG, 87719 Mindelheim (DE)
(72) Erfinder: Grob, Burkhart, Dr. h. c., 86825 Bad Wörishofen (DE)
(74) Vertreter: Schulz, Manfred

(56) Entgegenhaltungen:
- EP-A2- 1 004 393
- DE-A1- 19 510 498
- DE-A1-102006 052 402

## Beschreibung

Die Erfindung betrifft eine Werkzeugmaschine, welche eine Werkzeugspindel umfasst und durch eine in der Werkzeugmaschine vorgesehene Werkzeugwechselvorrichtung mindestens ein Bearbeitungswerkzeug in die Werkzeugspindel ein- beziehungsweise auswechselbar ist und die Werkzeugspindel das Bearbeitungswerkzeug für Bearbeitungszwecke um eine Spindelachse in Rotation versetzt. Solche Werkzeugmaschinen sind z.B. aus den Patentdokumenten DE-A-19510498 und EP-A-1004393 bekannt.

Vorgenannten Werkzeugmaschinen sind zum Beispiel für die spanabhebende Materialbearbeitung hinlänglich bekannt. Sie werden zum Beispiel als Bearbeitungseinheiten oder als Bearbeitungszentren, insbesondere im metallverarbeitenden Bereich eingesetzt. Ein Merkmal gattungsgemäßer Werkzeugmaschinen ist, dass der Werkzeugwechselvorgang möglichst schnell durchzuführen ist, um Stillstandszeiten der Werkzeugmaschine zu minimieren. Um einerseits eine hohe Variabilität bei der Bearbeitung mit gattungsgemäßen Werkzeugmaschinen sicherzustellen und zum anderen den Werkzeugwechselprozess entsprechend zu beschleunigen, ist es bekannt, in der Werkzeugmaschine Werkzeugmagazine vorzusehen, in welchen eine Vielzahl von die einzelnen Bearbeitungswerkzeuge aufnehmenden Lagerplätzen vorgesehen sind. Bekannte Werkzeugwechselvorrichtungen kombinieren eine Linearbewegung des eingliedrigen Tragarmes mit einer Rotationsbewegung des von dem Tragarm gehaltenen Werkzeugträgers, der üblicherweise zwei Werkzeugaufnahmen aufweist. Diese kinematische Anordnung ist allerdings unflexibel und erlaubt es nicht, oder nur mit erheblichem Aufwand, dass mehrteilige Werkzeugmagazine, die an verschiedenen Orten innerhalb der Werkzeugmaschine angeordnet sein können, effizient mit der Werkzeugspindel zusammenwirken.

Es ist daher Aufgabe der Erfindung, eine Anordnung vorzuschlagen, durch welche die Beweglichkeit der im Maschinengestell angeordneten Werkzeugwechselvorrichtung erhöht wird, um dadurch die Möglichkeit zu eröffnen, aus einem verhältnismäßig großen, in der Werkzeugmaschine vorgehaltenem Vorrat an Bearbeitungswerkzeugen, schnell und effizient Bearbeitungswerkzeuge an der Spindel ein- und auszuwechseln.

Zur Lösung dieser Aufgabe geht die Erfindung aus von einer Werkzeugmaschine wie eingangs beschrieben und schlägt vor, dass die Werkzeugwechselvorrichtung einen, aus mindestens zwei Gliedern bestehenden Tragarm aufweist und der Tragarm den das Bearbeitungswerkzeug aufnehmenden Werkzeugträger hält und zumindest zwei Glieder durch ein, eine Knickachse aufweisendes Knickgelenk gelenkig miteinander verbunden sind.

Die eingangs gestellte Aufgabe wird durch den erfindungsgemäßen Vorschlag optimal gelöst. Die Ausgestaltung des Tragarmes durch mindestens zwei, über ein Knickgelenk miteinander gelenkig verbundenen Gliedern, erlaubt es, die Beweglichkeit und daher die räumliche Positionierung des die Bearbeitungswerkzeuge aufnehmenden Werkzeugträgers erheblich zu erhöhen. Durch den erfindungsgemäßen Vorschlag ist es auch möglich, je nach Ausgestaltung beziehungsweise durch die Länge der Glieder, auch verhältnismäßig weit von dem eigentlichen Arbeitsraum der Arbeitsspindel entfernte Werkzeugmagazine mit der Werkzeugwechselvorrichtung zu erreichen. Es ist möglich, daher einen verhältnismäßig großen Werkzeugvorrat auch weit entfernt innerhalb der Werkzeugmaschine anzuordnen oder auch geschickterweise eine Aufteilung des Werkzeugvorrates in mehrere Werkzeugmagazinteile vorzusehen, wobei ein erstes Werkzeugmagazinteil in kürzerer Entfernung zur Werkzeugspindel und ein zum Beispiel größer ausgestaltetes zweites Werkzeugmagazinteil in weiterer Entfernung angeordnet ist. So ist es möglich, häufig benötigte Bearbeitungswerkzeuge in dem der Werkzeugspindel näherliegenden Werkzeugmagazinteil vorzusehen, seltener benötigte Bearbeitungswerkzeuge können weiter entfernt, in dem aber gleichwohl durch die Werkzeugwechselvorrichtung erreichbaren, zweiten Werkzeugmagazinteil eingelagert werden.

In der erfindungsgemäßen Werkzeugmaschine ist es dabei vorgesehen, dass an der Werkzeugwechselvorrichtung Antriebe vorgesehen sind, die für die Bewegung des Gliedes beziehungsweise der Glieder und auch des Werkzeugträgers dienen. Die Antriebe beziehungsweise wenigstens einer der Antriebe ist dabei günstigerweise als Rotationsantrieb ausgebildet. Ein derartiger Rotationsantrieb, der beispielsweise schrittweise oder kontinuierlich antreibt, ermöglicht eine vollständige Rotation der Glieder beziehungsweise des Werkzeugträgers, um die entsprechenden, die Glieder verbindenden Gelenke beziehungsweise Achsen, wodurch die Flexibilität und Reichweite des Tragarmes und damit die Möglichkeit zur räumlichen Positionierung des die Bearbeitungswerkzeuge aufnehmenden Werkzeugträgers weiter erhöht wird. Der Rotationsantrieb ist hierbei positionsgesteuert beziehungsweise als NC-gesteuerter Rotationsantrieb ausgebildet. Das heißt, in der Werkzeugmaschine gemäß der Erfindung ist eine gesonderte oder in die Maschinensteuerung integrierte oder mit dieser gekoppelte nummerische Steuerung vorgesehen, die in der Lage ist, einen Datensatz von Steuerungsbefehlen, die beispielsweise in Anlehnung an den Ablauf der Werkstückbearbeitung definiert werden, zu lesen, in Arbeits- und Bewegungsabläufe umzusetzen und nacheinander abzuarbeiten. Die Bewegung des Tragarmes beziehungsweise Werkzeugwechselvorrichtung kann durch die genannte Ausführungsform des Rotationsantriebes steuerungsseitig auf die Bearbeitungsvorgänge in der Werkzeugmaschine optimal abgestimmt werden, wodurch sich weitere Verbesserungen der Taktzeiten, insbesondere durch Optimierung der Werkzeugwechselvorgänge realisieren lassen.

Ebenfalls zu einer Verbesserung der Positionierbarkeit der Bearbeitungswerkzeuge beziehungsweise des dieser mit Bearbeitungswerkzeuge aufnehmenden Werkzeugträgers trägt die Ausführungsform der erfindungsgemäßen Werkzeugmaschine bei, wobei insbesondere über die vorgenannten (Rotations-)Antriebe die Winkellage der Glieder zueinander bezüglich der Knickachse sowie die Winkellage des ersten Gliedes relativ zum Grundkörper der Werkzeugwechselvorrichtung verstell- oder einstellbar ist und der Werkzeugträger beziehungsweise die Werkzeugaufnahme senkrecht zur Spindelachse um die Trägerachse drehbar ist. Eine derartige Ausgestaltung der erfindungsgemäßen Werkzeugmaschine erlaubt die Verstellung und Neupositionierung der Bearbeitungswerkzeuge beziehungsweise des Werkzeugträgers in Anlehnung beispielsweise an eine Bewegung der Spindel beziehungsweise des Bearbeitungswerkzeuges. Dies erlaubt eine kollisionsfreie und insbesondere zügige Positionierung der Werkzeugwechselvorrichtung beziehungsweise des Werkzeugträgers, die abgestimmt ist auf die Bewegung des Bearbeitungswerkzeuges und somit ebenfalls zur Verbesserung der Taktzeiten bei der Bearbeitung von Werkstücken in der erfindungsgemäßen Werkzeugmaschine beiträgt.

Die Ausführungsform der erfindungsgemäßen Werkzeugmaschine zeichnet sich auch dadurch aus, dass ein Bearbeitungsraum und ein räumlich davon getrennter Werkzeugwechselraum für die Werkzeugwechselvorrichtung vorgesehen ist. Eine räumliche Trennung von Bearbeitungsraum und Werkzeugwechselraum wird durch die Anordnung einer Trennwand erreicht. Die Werkzeugspindel beziehungsweise das Bearbeitungswerkzeug kann zum Werkzeugwechsel aus dem Bearbeitungsraum in den Werkzeugwechselraum bewegt, insbesondere verschoben werden. Diese Ausgestaltung der Werkzeugmaschine erlaubt es, eine besonders kompakte Bauweise des Bearbeitungsraumes zu realisieren, da sämtliche für den Werkzeugwechsel notwendigen Maschinenbestandteile außerhalb des Bearbeitungsraumes verbleiben. Dadurch, dass der Bearbeitungsraum letztlich nur das Bearbeitungswerkzeug sowie das zu bearbeitende Werkstück aufnehmen muss, kann dieser relativ klein dimensioniert werden. Dies hat besonders bei der Reinigung beziehungsweise dem Abführen der beispielsweise bei der Bearbeitung anfallenden Späne Vorteile, da hier eine vergleichsweise gute Reinigungsleistung bei relativ kleinem Reinigungsmediumseinsatz möglich ist. Zum Werkzeugwechsel wird das Bearbeitungswerkzeug komplett aus dem Bearbeitungsraum entfernt, ein räumlich vom Bearbeitungsraum getrennter Werkzeugwechsel durchgeführt und das Bearbeitungswerkzeug hernach wieder in den Bearbeitungsraum eingeführt, beispielsweise eingeschoben. Die Ausgestaltung hat den weiteren Vorteil, dass nur wenige bis keine Verunreinigungen aus dem Bearbeitungsraum in den Werkzeugwechselraum überführt werden, wodurch eine starke Verschmutzung und unter Umständen ein vorzeitiger Verschleiß der Werkzeugwechselvorrichtung vermieden werden kann.

Die Werkzeugmaschine gemäß der vorliegenden Erfindung weist bevorzugt eine Werkzeugspindel auf, die zum Beispiel für Bearbeitungszwecke parallel zur Trennwand, insbesondere zumindest entlang einer (bevorzugt horizontalen) Raumachse verfahrbar ist. Hierdurch wird ein zusätzlicher Freiheitsgrad der Bewegung der Werkzeugspindel trotz vorhandener Trennwand realisiert. Dies erfolgt dadurch, dass in der Trennwand insbesondere ein Durchbruch vorgesehen ist, innerhalb dessen die Werkzeugspindel parallel zur Trennwand verfahren wird. Um einen dichten Abschluss des Bearbeitungsraumes gegenüber dem Werkzeugwechselraum dennoch realisieren zu können, ist vorgesehen, dass in diesem Durchbruch flexible Elemente angeordnet sind, die zwar eine Bewegung der Werkzeugspindel beziehungsweise des Bearbeitungswerkzeuges, das durch die Trennwand hindurchragt, erlauben, den Bearbeitungsraum jedoch dennoch zufriedenstellend gegenüber dem Werkzeugwechselraum abschließen. Derartige flexible Elemente können beispielsweise in Form einer Rolljalousie oder dergleichen ausgebildet sein.

Aus Arbeits- und Geräteschutzgründen, um eine Schalldämpfung zu erreichen oder aber um die Werkzeugspindel beziehungsweise die sonstigen, die Bearbeitungswerkzeuge tragenden Elemente der Werkzeugmaschine auch in der Bearbeitungsposition beziehungsweise während des Bearbeitungsprozesses abzudecken, weist die erfindungsgemäße Werkzeugmaschine bevorzugt eine Abdeckung auf. Diese Abdeckung ist als die Werkzeugspindel im Werkzeugwechselraum zumindest abschnittsweise umschließende, die Werkzeugspindel jedoch zum Werkzeugwechsel freigebende Haube ausgebildet. Als günstig erweist es sich, wenn die Abdeckung relativ zur Spindelachse verschiebbar ausgebildet ist, das bedeutet, dass die Abdeckung beispielsweise für den Werkzeugwechsel parallel zur Spindelachse zurückgezogen, nach vorne verschoben oder weggeklappt oder geschwenkt werden kann, um das Bearbeitungswerkzeug freizugeben. Dabei wird für den Werkzeugwechselprozess die Werkzeugspindel in Richtung der Spindelachse zurückgezogen, wodurch das Bearbeitungswerkzeug von dem Bearbeitungsraum in den Werkzeugwechselraum gelangt. Desgleichen besteht die Möglichkeit, dass die Abdeckung zusammen oder voreilend mit der Spindel oder unabhängig hiervon (mit einem separaten Antrieb) entlang der Spindelachse verschiebbar ausgebildet ist und wenn die Werkzeugspindel zum Werkzeugwechsel zurückgezogen wird, gleichzeitig oder voreilend mit dieser Bewegung zurückgleitet oder verschwenkt, um die Werkzeugspindel beziehungsweise das Bearbeitungswerkzeug zum Werkzeugwechsel freizugeben. Um einen Abschluss der Trennwand zu ermöglichen, ist des weiteren ein Anschlag oder eine Aufnahme an der Trennwand vorgesehen, mit dem die Abdeckung dicht in Eingriff ist. Die Abdeckung vermeidet nicht nur den Eintrag von Schmutz beziehungsweise die Emmision von Schall, sondern schützt die Werkzeugspindel, beispielsweise auch gegen störungsbedingte Kollisionen beispielsweise mit dem Werkzeug beziehungsweise Werkzeugträger.

Durch die erfindungsgemäße Werkzeugmaschine wird auch die Aufgabe gelöst, die Zeiten bei der Bearbeitung von Werkstücken dadurch zu reduzieren, dass ein zügiger Werkzeugwechsel erreicht werden kann. Vorgesehen sind hier sehr kurze Span zu Span-Zeiten von maschinenabhängig bis zu beispielsweise 3 Sek. bis 5 Sek. Um dieses Ziel zu erreichen, erweist es sich als vorteilhaft, wenn die mit den Werkzeugen bestückten Werkzeugträger in unmittelbarer Nähe zum Bearbeitungswerkzeug beziehungsweise zur Werkzeugspindel angeordnet sind. Ferner ist vorgesehen, dass die Werkzeugwechselvorrichtung beziehungsweise der Werkzeugträger während der Bearbeitung im Werkzeugwechselraum verbleibt und hierbei insbesondere benachbart zu dem in dem Werkzeugwechselraum bewegten Bearbeitungswerkzeug positionierbar ist. Aufgrund der Beweglichkeit und der oben bereits angesprochenen freien Positionierbarkeit des Bearbeitungswerkzeuges, der Werkzeugspindel beziehungsweise der Werkzeugwechselvorrichtung lässt sich hierbei ein insbesondere gleichbleibender Abstand zwischen Bearbeitungswerkzeug und Werkzeugwechselvorrichtung beziehungsweise Werkzeugträger realisieren, da unter Anderem aufgrund der NC-Steuerung der entsprechenden Antriebe der Werkzeugwechselvorrichtung die Einhaltung des gleichbleibenden Abstandes auch bei Positionswechseln der Werkzeugspindel möglich ist. Der mindestens einzuhaltende Abstand zwischen Werkzeugwechselvorrichtung beziehungsweise Werkzeugträger und Bearbeitungswerkzeug beziehungsweise Werkzeugspindel ergibt sich aus der Reaktionszeit für eine Bewegung der Werkzeugwechselvorrichtung beziehungsweise des Werkzeugträgers und der Lineargeschwindigkeit der Werkzeugspindel (parallel zur Trennwand) beim Verfahren beziehungsweise Verschieben im Bearbeitungsraum. Ist der Abstand geringer als die Strecke, die von dem sich bewegenden Bearbeitungswerkzeug beziehungsweise der Werkzeugspindel zurückgelegt wird, bis eine Reaktion, das heißt eine Bewegung der Werkzeugwechselvorrichtung beziehungsweise des Werkzeugträgers erfolgt, ist eine Kollision der beiden Maschinenelemente unumgänglich. Daher erweist es sich als günstig, wenn diese beiden Bewegungskomponenten entsprechend aufeinander abgestimmt sind und der Abstand zwischen den Elementen ausgehend hiervon eingestellt, eingehalten und dabei möglichst klein gehalten wird, um die Werkzeugwechselvorrichtung beziehungsweise den Werkzeugträger für einen Werkzeugwechsel zügig zur Verfügung stellen zu können. Hierdurch kann dann die Wechselzeit für das Werkzeug signifikant reduziert und es können damit die Taktzeiten bei der Bearbeitung verringert werden. Hierdurch ergibt sich auch eine Bestimmung für die benachbarte Position von Werkzeugwechselvorrichtung zu Werkzeugspindel beziehungsweise Bearbeitungswerkzeug.

Ebenfalls durch das Nachführen der Werkzeugwechselvorrichtung anhand der Bewegung der Werkzeugspindel kann erreicht werden, dass die Zeit für die Rückführung der Werkzeugspindel an einen Startpunkt für die Bearbeitung aktiv zum Werkzeugwechsel genutzt wird, sofern Endpunkt und Startpunkt der Bearbeitung auseinanderfallen. Durch das Nachführen der Werkzeugwechselvorrichtung beziehungsweise des Werkzeugträgers kann der Werkzeugwechselvorgang unmittelbar am Ende des Bearbeitungsschrittes mit Zurückziehen der Spindel aus dem Bearbeitungsraum erfolgen und während des Verfahrens der Werkzeugspindel im Werkzeugwechselraum fortgesetzt werden. Durch die mit der erfindungsgemäßen Werkzeugmaschine erreichbare Flexibilität bei der Positionierung der Werkzeugwechselvorrichtung wie auch der Werkzeugspindel können auch Verfahrenzeiten optimal im Interesse einer Reduzierung der Taktzeiten genutzt werden.

Insbesondere in diesem Zusammenhang wird es als günstig angesehen, wenn die Werkzeugspindel relativ zur Spindelachse, insbesondere horizontal bewegbar ausgebildet ist. Die Bewegung der Werkzeugwechselvorrichtung und/oder des Werkzeugträgers ist dann anhand der Bewegung der Werkzeugspindel einstell- oder verstellbar, wodurch der vorgenannte vorteilhafte Effekt der Werkzeugmaschine realisierbar ist und eine stets optimale Positionierung der Bearbeitungswerkzeuge gewährleistet bleibt.

Dabei setzt der erfindungsgemäße Vorschlag nicht zwingend voraus, dass die erfindungsgemäße Werkzeugmaschine mit einem mehrteiligen Werkzeugmagazin auszustatten ist. Auch bei einem normalen Vorrat von Bearbeitungswerzeugen in der Werkzeugmaschine bietet der erfindungsgemäße Vorschlag bereits Vorzüge, da durch das Zusammenknicken der beiden Glieder eine sehr platzsparende Ausgestaltung der Werkzeugwechselvorrichtung möglich ist. Eine solche platzsparende Anordnung war mit den mit Linearstellantrieben ausgestatteten Tragarmen nach dem Stand der Technik nicht möglich.

Gerade aber der Raum innerhalb des von dem Maschinengestell definierten Bereiches einer Werkzeugmaschine ist wertvoll und definiert letztendlich die Größe des Werkzeugwechselraums beziehungsweise des Bearbeitungsraumes und somit auch die maximale Größe eines mit der erfindungsgemäßen Werkzeugmaschine bearbeitbaren Werkstückes, oder die Baugröße der erfindungsgemäßen Werkzeugmaschine.

Dabei ist es ein weiterer Vorzug der Erfindung, dass die Werkzeugwechselvorrichtung, aufgrund ihres erfindungsgemäßen Aufbaus, auch derart aus dem Bearbeitungsbereich, dem Arbeitsraum wegschwenkbar ist und nicht stört, da durch die Ausgestaltung des Tragarmes in mindestens zwei, gegebenenfalls auch mehrere Glieder und deren gelenkige Anordnung der Tragarm zusammengefaltet oder zusammengewinkelt platzsparend weggeschwenkt werden kann.

Vorteilhafterweise wird eine erfindungsgemäße Werkzeugmaschine vorgeschlagen, bei welcher eine Werkzeugspindel vorgesehen ist. Die Werkzeugmaschine besitzt ein diese aussteifende und die verschiedenen Elemente der Werkzeugmaschine tragendes Maschinengestell, welches auch gegebenenfalls als Maschinenrahmen bezeichenbar ist. In einer Auslegung des Begriffs "Maschinengestell" wird dabei das Maschinengestell durch die äußeren, die Werkzeugmaschine begrenzenden Maschinenkanten festgelegt und die Werkzeugspindel befindet sich innerhalb dieses, durch diese Kanten definierten Volumens. Gemäß der Ausgestaltung des Maschinengestells gehören hierzu auch die Maschinenverkleidung, die gegebenenfalls auch über die tragenden Elemente des Maschinengestells hinausragen können beziehungsweise auch selbsttragende Eigenschaften aufzuweisen vermögen.

Es ist klar, dass die in der Werkzeugmaschine, also innerhalb des durch die Außenkanten definierten Maschinengestells angeordnete Werkzeugspindel gegen das Werkstück anstellbar ist und daher um mindestens eine, üblicherweise um mehrere, bevorzugt orthogonal angeordnete Achsen (zwei oder drei Achsen) beweglich ist.

In einer bevorzugten Ausgestaltung der Erfindung ist vorgesehen, dass die Werkzeugwechselvorrichtung in dem Maschinengestell angeordnet ist.

Wie bereits beschrieben, definiert der Begriff "Maschinengestell" die äußeren Abmessungen, die zur Werkzeugmaschine gehören. Bezüglich dieser Abmessungen befindet sich in dieser erfindungsgemäßen Variante die Werkzeugwechselvorrichtung innerhalb. Es ist dabei ein Aspekt der Erfindung, dass die Werkzeugwechselvorrichtung tatsächlich Bestandteil der Werkzeugmaschine ist und in dieser realisiert ist, wodurch auch eine sehr kompakte Werkzeugmaschine realisierbar ist, da keine außen angeordneten Werkzeugwechselvorrichtungen vorgesehen werden. Gleichzeitig ist die Anordnung erfindungsgemäß sehr platzsparend realisiert, wodurch ein verhältnismäßig kleiner Arbeitsraum für die Bearbeitung der Werkstücke realisiert werden kann, da hierin nur das Werkstück und das Bearbeitungswerkzeug untergebracht werden muss, die Werkzeugwechselvorrichtung jedoch unterhalb des Bearbeitungs- oder Arbeitsraumes verbleibt.

Neben der Variante, bei welcher die Werkzeugwechselvorrichtung in dem Maschinengestell angeordnet ist, umfasst die Erfindung auch Lösungen, bei welchen die Werkzeugwechselvorrichtung neben dem Maschinengestell, gegebenenfalls auf einem eigenen Gestell oder Lager, gegebenenfalls neben dem Maschinengestell, aufgehängt und gestützt angeordnet ist.

In einer weiteren bevorzugten Ausgestaltung der Erfindung ist vorgesehen, dass die Werkzeugwechselvorrichtung von dem Maschinengestell gehalten ist. Durch eine solche Ausgestaltung wird erreicht, dass die Werkzeugwechselvorrichtung, die ihrerseits ein erhebliches Gewicht aufweist, optimal gelagert ist und die Elemente, die für die Stabilität der Werkzeugmaschine verantwortlich ist, auch hier entsprechend eingesetzt werden.

Des Weiteren ist vorgesehen, dass während des Bearbeitungseinsatzes des von der Werkzeugspindel gehaltenen Bearbeitungswerkzeuges zumindest der Werkzeugträger in der Werkzeugmaschine und hierbei, insbesondere im Werkzeugwechselraum, gegebenenfalls unmittelbar zur Werkzeugspindel beziehungsweise der diese während der Bearbeitung umschließenden Abdeckung verbleibt.

Durch diese Ausgestaltung wird erreicht, dass zumindest der Werkzeugträger relativ nah zur Werkzeugspindel positioniert bleibt und so nach Abschluss der Bearbeitung schon nach einer kurzen Zeitspanne das nicht mehr benötigte Bearbeitungswerkzeug auswechselbar ist.

Die Erfindung sieht weiterhin vor, dass die Werkzeugwechselvorrichtung einen Grundkörper aufweist, an welchem der Tragarm an einem eine Grundachse aufweisenden Grundgelenk gelenkig, insbesondere drehbar angeordnet ist. Als Grundkörper ist zum Beispiel ein Bereich des Maschinengestells oder des Maschinenrahmens einsetzbar. Als Grundkörper ist dabei aber auch ein separates Element alternativ vorgesehen, welches in geeigneter Weise an der Werkzeugmaschine oder Maschinengestell befestigbar oder abstützbar ist. Durch den Grundkörper erfährt die Werkzeugwechselvorrichtung eine Befestigung oder Abstützung in der Werkzeugmaschine. An diesem Grundkörper ist der, aus mehreren Gliedern bestehende Tragarm gelenkig angeschlossen. Hierfür besteht ein, eine Grundachse aufweisendes Grundgelenk. Hierdurch ist es möglich, den gesamten Tragarm (ausgefaltet oder zusammengeknickt) um die Grundachse herumzuschwenken, wobei hierzu insbesondere ein Schwenkwinkelbereich von bis zu 360° vorgesehen ist. Durch eine gegenläufige Verschwenkbewegung der einzelnen Glieder gegenüber dem Knickgelenk einerseits beziehungsweise Grundgelenk andererseits ist es aber auch möglich, letztendlich eine geradlinige Bewegung für den Werkzeugträger zu realisieren. Es wird nur ein Glied, welches an den Grundkörper anschließt, verschwenkt, im Übrigen aber verbleibt der gesamte Tragarm auf der gleichen Seite des Grundkörpers. Geschickterweise sind entsprechende Antriebe an der Werkzeugwechselvorrichtung vorgesehen, die für eine Bewegung des Gliedes beziehungsweise der Glieder und auch des Werkzeugträgers, insbesondere für die Schwenkbewegung an den jeweiligen Gelenken dienen.

Für eine noch höhere Flexibilität der Werkzeugwechselvorrichtung ist vorgesehen, dass diese beziehungsweise deren Grundkörper entlang einer Führung zumindest in einer Raumrichtung beweglich und positionierbar ist. Der Grundkörper hat dann die Ausgestaltung und Aufgabe eines Schlittens, der auf einer Führungsbahn oder Führungsschiene beweglich positionierbar ist und an entsprechenden Positionen innerhalb der Werkzeugmaschine oder an der Werkzeugmaschine, zum Beispiel für Be- und Entladevorgänge bezüglich Werkzeugschleusen, Werkzeugmagazin oder Werkzeugspindel verfahrbar ist. Für die Bewegung des Schlittens auf der Führung ist ein Antrieb vorgesehen.

Dabei ist die Anordnung nicht auf eine Positionierung entlang einer Achse beschränkt, es ist auch möglich zum Beispiel eine Kreuzschlittenführung zu realisieren und so eine Beweglichkeit der Werkzeugwechselvorrichtung beziehungsweise deren Grundkörper entlang zweier Achsen zu realisieren.

Natürlich ist es auch möglich, dass der Grundkörper in der Werkzeugmaschine feststehend ausgebildet ist und die Beweglichkeit der einzelnen Elemente, der Glieder des Tragarmes zueinander und bezüglich des Grundkörpers wie auch die Beweglichkeit des Werkzeugträgers ausreichen, alle Bereiche innerhalb der Werkzeugmaschine zu erreichen.

Es hat sich als günstig erwiesen, den Werkzeugträger mit bevorzugt zwei Werkzeugaufnahmen auszustatten, die gemeinsam um eine Drehachse verschwenkbar sind. Die Ausgestaltung ist dabei so getroffen, dass in einer ersten Werkzeugaufnahme ein leerer Platz zur Verfügung gestellt wird, um das auszuwechselnde Bearbeitungswerkzeug aus der Werkzeugspindel aufzunehmen und in der zweiten Werkzeugaufnahme das einzuwechselnde Bearbeitungswerkzeug vorzuhalten.

Eine weitere vorteilhafte Ausgestaltung der Erfindung liegt darin, dass eine paarweise parallele Anordnung von Grundachse, Knickachse, Drehachse und Spindelachse zueinander vorgesehen ist. Natürlich umfasst die Erfindung auch Lösungen, bei welchen drei beliebige der vorgenannten vier Achsen zueinander parallel angeordnet sind. Von besonderem Vorzug ist die Ausgestaltung, dass Grundachse, Knickachse, Drehachse und Spindelachse zueinander jeweils paralle sind, da daraus eine verhältnismäßig einfache Kinematik resultiert.

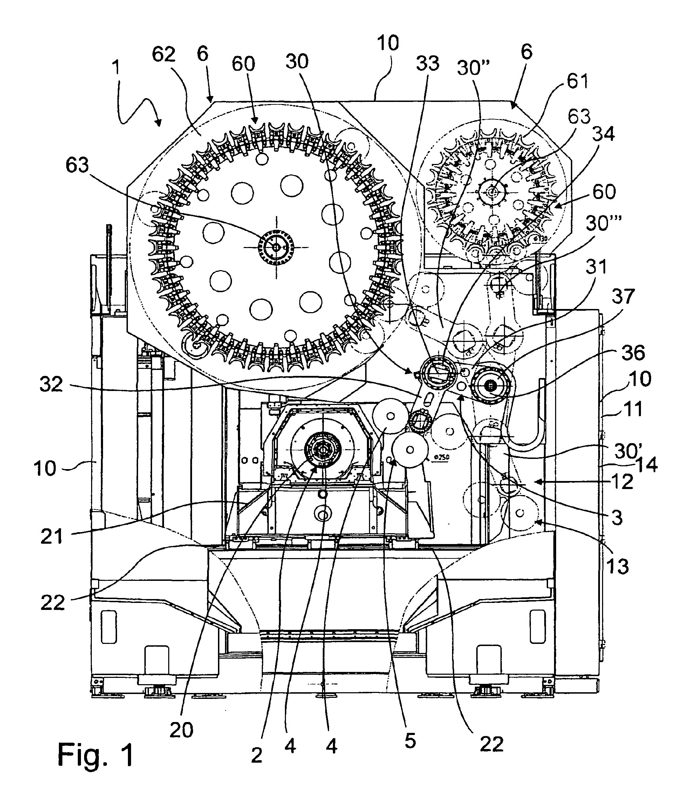

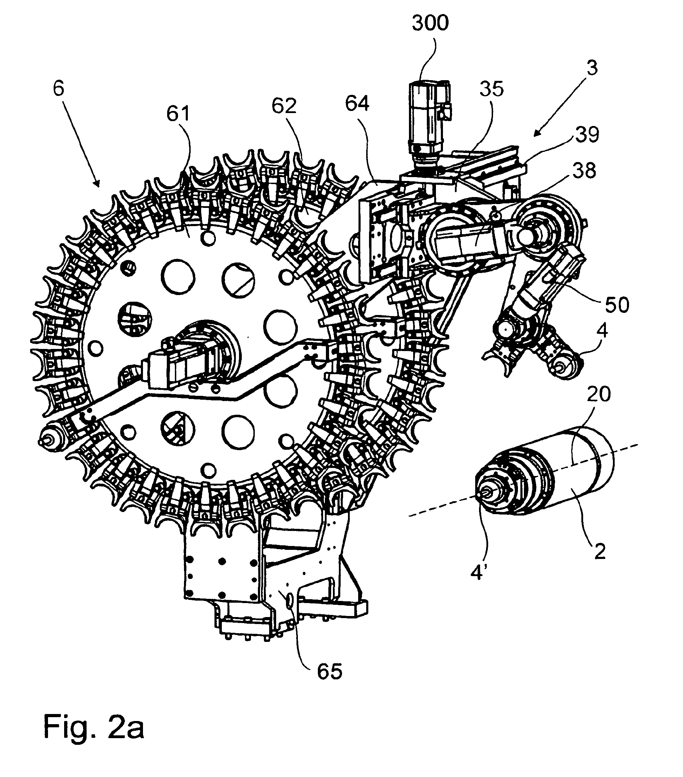

Bezüglich des Werkzeugmagazines wurde bereits darauf hingewiesen, dass es ein Vorzug der Erfindung ist, dass das Werkzeugmagazin nicht nur einteilig ausgebildet ist, sondern gegenbenenfalls aus mindestens zwei nebeneinander oder auch hintereinander angeordneten Werkzeugmagazinteilen besteht. Das Werkzeugmagazin beziehungsweise das Werkzeugmagazinteil ist zum Beispiel als Scheiben- oder Kettenmagazin ausgebildet. Dabei befinden sich die einzelnen Bearbeitungswerkzeuge in Lagerplätzen, die im Randbereich des Werkzeugmagazins beziehungsweise Werkzeugmagazinteiles vorgesehen sind. Um eine verhältnismäßig große Anzahl von Bearbeitungswerkzeugen bevorraten zu können, ist das Werkzeugmagazin beziehungsweise das Werkzeugmagazinteil verhältnismäßig großflächig realisiert, wobei bevorzugt die Werkzeugachse der vorgehaltenen Bearbeitungswerkzeuge (und somit auch die Spindelachse) parallel zur Flächennormale der flächigen Ausgestaltung des Werkzeugmagazins beziehungsweise des Werkzeugmagazinteiles ist. Erfindungsgemäß ist es nun möglich, eine noch größere Anzahl von Bearbeitungswerkzeugen in der erfindungsgemäßen Werkzeugmaschine vorzuhalten, wenn das Werkzeugmagazin in mehrere Werkzeugmagazinteile aufgeteilt ist, die ihrerseits zum Beispiel nebeneinander angeordnet sind, wie dies zum Beispiel in Fig. 1 gezeigt ist oder die hintereinander angeordnet sind, wie zum Beispiel in Fig. 2a. Bei einer Anordnung nebeneinander sind, gesehen in Richtung der Flächennormale, beide Werkzeugmagazinteile sichtbar, bei der Anordnung hintereinander, verdeckt das vordere das dahinter liegende Werkzeugmagazinteil.

Natürlich ist es möglich auch entsprechende Mischformen zu realisieren, also zum Beispiel insgesamt vier Werkzeugmagazinteile vorzusehen, die aufgeteilt sind in zwei nebeneinander angeordnete Gruppen, die jeweils zwei Werkzeugmagazinteile hintereinander aufweisen. Durch eine geschickte Ausgestaltung des Werkzeugmagazins und Anordnung der Werkzeugmagazinteile kann ein sehr großer Anteil von Bearbeitungswerkzeugen in der Werkzeugmaschine vorgehalten werden.

Gerade bei verhältnismäßig komplex aufgebauten Werkzeugmagazinen beziehungsweise Werkzeugmagazinteilen ist es von Vorteil, dass der Grundkörper parallel und/oder rechtwinkelig zur Spindelachse beweglich und positionierbar ist, um somit auch weiter entfernt liegende Bereiche des Werkzeugmagazins beziehungsweise Werkzeugmagazinteiles zu erreichen. Hierbei ist vorgesehen, dass der Grundkörper, insbesondere entlang einer Verbindungsachse der Werkzeugmagazinteile, beweglich und positionierbar ist, um hierdurch den Zugriff an die Magazinteile beziehungsweise die Zugriffszeit zu verkürzen und somit die Taktzeiten weiter zu optimieren, um damit einen reibungslosen Werkzeugauswahl- und -wechselprozess zu gewährleisten.

Bevorzugterweise wird eine möglicht geradlinige Bewegung des Werkzeugträgers gerade für das Einsetzen oder Herausnehmen eines Bearbeitungswerkzeuges in den Lagerplatz eines Werkzeugmagazines angestrebt. Entsprechend dem Aufbau der Werkzeugwechselvorrichtung mit mehreren, einen Tragarm bildenden, zueinander abwinkelbar oder abknickbaren (und daher zueinander verschwenkbaren) Gliedern, überwiegt natürlich die Verschwenkbewegung der einzelnen Elemente. Es ist daher in der Antriebssteuerung der Antriebe eine Achstransformation vorgesehen, derart, dass die Bewegung der einzelnen Glieder zueinander, die durch die Antriebe bewirkt wird, so geschickt überlagert werden, dass die gewünschte Bewegung resultiert. Die Achstransformation setzt dabei die gewünschte Bewegung des Werkzeugträgers um in einzelne Verschwenkbewegungen der einzelnen Glieder, die einander dann geschickt überlagern, dass die gewünschte Bewegung resultiert. Dabei ist es möglich, zum Beispiel sowohl eine lineare Bewegung (zum Beispiel im Rahmen einer Lineartransformation) wie auch eine gebogene Bewegungsbahn zu realisieren. Mit Hilfe der Achstransformation wird die Vielzahl der verschiedenen Freiheitsgrade der einzelnen Glieder in eine gegebenenfalls auch komplexe Bewegung des Werkzeugträgers geschickt genützt. Letztendlich erfolgt mit der Achstransformation ein Umrechnen der kartesischen Bewegungskoordinaten in die Bewegungskoordinaten der jeweiligen Bezugssysteme der einzelnen Glieder beziehungsweise auch umgekehrt.

In einer bevorzugten Ausgestaltung der Erfindung ist vorgesehen, dass das Werkzeugmagazin und die Werkzeugwechselvorrichtung auf einem gemeinsamen Träger angeordnet sind. Es ist daher möglich, diese kombinierte Baueinheit separat vorzufertigen und modulhaft in die Werkzeugmaschine einzusetzen. Insbesondere ist es möglich, eine baukastenartige Konstruktion zu wählen, um zum Beispiel eine größere Stückzahl vorgefertigter Träger in verschieden Werkzeugmagazinen so einzusetzen. Dadurch, dass die Werkzeugwechselvorrichtung in erheblichem Maße mit dem Werkzeugmagazin zusammenarbeitet, ist auch die gemeinsame Anordnung auf einem Träger konstruktionsbedingt von Vorteil.

Üblicherweise ist die Antriebssteuerung der Antriebe der Werkzeugwechselvorrichtung ein Teil der Steuerung der Werkzeugwechselvorrichtung. Erfindungsgemäß wird vorgeschlagen, dass die Maschinensteuerung integriert die Steuerung der Werkzeugwechselvorrichtung umfasst und auch so datentechnisch eine hohe Verfügbarkeit und ein schneller Austausch der Werkzeuge möglich ist.

In der Zeichnung ist die Erfindung schematisch in einem Ausführungsbeispiel dargestellt. Es zeigen:
- Fig. 1: in einer Ansicht die erfindungsge- mäße Werkzeugmaschine;
- Fig. 2a, 2b, 3a, 3b: in einer dreidimensionalen An- sicht (Fig. 2a, 3a) beziehungs- weise in einer Ansicht (Fig. 2b, 3b) die wesentlichen Elemente nach der erfindungsgemäßen Werkzeugma- schinen in zwei verschiedenen Po- sitionen der Werkzeugwechselvor- richtung;
- Fig. 4: in einer dreidimensionalen An- sicht die Werkzeugwechselvorrich- tung gemäß der Erfindung und
- Fig. 5: in einer seitlichen Schnittdar- stellung die wesentlichen Elemente nach der erfindungsgemäßen Werk- zeugmaschine beim Werkzeugwechsel.

In den Figuren sind gleiche oder einander entsprechende Elemente jeweils mit den gleichen Bezugszeichen bezeichnet und werden daher, sofern nicht zweckmäßig, nicht erneut beschrieben.

In Fig. 1 ist die erfindungsgemäße Werkzeugmaschine 1 schematisch dargestellt. Die verschiedenen Elemente der Werkzeugmaschine 1 werden von einem Maschinengestell 10 getragen, zu dem, wie hier dargestellt, auch das Maschinengehäuse zählt. Das Maschinengestell umschließt dabei den Raum, innerhalb welchem die verschiedenen Elemente der Werkzeugmaschine angeordnet sind. Hierzu zählen unter anderem die Werkzeugspindel 2, die Werkzeugwechselvorrichtung 3 sowie das Werkzeugmagazin 6, das in dem hier dargestelltem Ausführungsbeispiel aus zwei Werkzeugmagazinteilen 61, 62 besteht.

Die in Fig. 1 gewählte Ansicht ermöglicht einen Blick in Richtung der Spindelachse 20 (rechtwinkelig zur Blattebene verlaufend) von vorne in die Werkzeugmaschine 1. Rechts neben und etwas höher angeordnet als die Spindelachse 20 ist die Werkzeugwechselvorrichtung 3 vorgesehen.

Die Werkzeugwechselvorrichtung 3 besteht aus einem Grundkörper 35 (in Fig. 1 verdeckt), an dem sich über das Grundgelenk 37 der Tragarm 30 gelenkig anschließt. An dem dem Grundkörper 35 abgewandten Ende des Tragarmes 3 befindet sich der Werkzeugträger 5, der die in die Werkzeugspindel 2 einzusetzenden und auszuwechselnden Bearbeitungswerkzeuge 4 trägt beziehungsweise vorhält.

Erfindungsgemäß wird vorgeschlagen, dass der Tragarm 30 zumindest aus zwei, durch ein Knickgelenk 34 miteinander verbundenen Gliedern 31, 32 besteht. Durch die Ausgestaltung des Knickgelenkes 34 ist auch eine Knickachse 33 definiert. Es ist gut zu erkennen, dass in der ausgezogenen Darstellung des Tragarmes 30, zwischen dem ersten Glied 31 und dem zweiten Glied 32 des Tragarmes 30 ein Knickwinkel von etwas mehr als 90° besteht.

Die Werkzeugspindel 2 ist gegebenenfalls entlang mehrerer Achsen bewegbar und positionierbar. Für den eigentlichen Bearbeitungsprozess ist die Spindel, insbesondere das Bearbeitungswerkzeug 4 in Richtung der Spindelachse 20 gegen das (nicht gezeigte) Werkstück anstellbar beziehungsweise zurückbewegbar.

Die gesamte Werkzeugspindel ist auf einem Schlitten 21 aufgebaut, welcher auf einer Führung 22 längsbeweglich und positionierbar ist. Die Richtung der Führung 22 ist dabei rechtwinklig zur Spindelachse 20 (und somit auch rechtwinklig zu der Knickachse 33). Eine solche Beweglichkeit ist im Stand der Technik hinlänglich bekannt. Diese Beweglichkeit auf der Führung 22 erlaubt es, die Werkzeugspindel 2 in der Werkzeugmaschine 1 nach rechts zu verfahren und so die Werkzeugspindel 2 in den Bereich des Werkzeugträgers 5 zu bringen. Dadurch ist es möglich, Baugröße an dem Tragarm 30 zu sparen, dieser muss nur so ausgelegt sein, um die einzelnen Werkzeugmagazinteile 61, 62 beziehungsweise Werkzeugmagazin 6 zu erreichen.

Fig. 1 zeigt aber nicht nur eine Stellung des Tragarmes 30, sondern auch noch drei weitere alternative Stellungen des Tragarmes 30', 30" und 30"', die mit geringerer Strichbreite beziehungsweise gestrichelt angedeutet sind. Die Tragarmstellung 30' zeigt den Tragarm fast komplett in seinem Knickgelenk gestreckt nach unten rechts geschwenkt. In diesem Bereich besitzt das Maschinengehäuse 11 eine Schleusentüre 14, durch welche in Höhe des Anwenders in einfacher Weise ein Bearbeitungswerkzeug 4 in das Innere der Werkzeugmaschine 1 eingeschleust oder zum Beispiel ein schadhaftes Bearbeitungswerkzeug ausgeschleust werden kann. Die Schleusentüre 14 verschließt dabei die Werkzeugwechselschleuse 12 der Werkzeugmaschine 1, in welcher zumindest ein Halteplatz 13 für ein Bearbeitungswerkzeug 4 vorgesehen ist.

Die Tragarmstellung 30' beschreibt die Stellung des Tragarmes 30, um zum Beispiel ein Bearbeitungswerkzeug aus dem Halteplatz 13 aufzunehmen oder in diesen abzugeben.

Darüber hinaus ist es möglich, den Tragarm 30 zum Beispiel in einer Wartepositionstellung, zum Beispiel einer der Tragarmstellung 30' entsprechenden Stellung, zu positionieren, wobei der Werkzeugträger 5 dann bereits mit einem einzuwechselnden Bearbeitungswerkzeug 4 beladen sein mag, der Tragarm aber insgesamt weit genug von dem Bearbeitungsraum entfernt ist und so die Bearbeitung dort auch nicht stört.

Die Tragarmposition 30" zeigt eine zweite Stellungsvariante des Tragarmes, um aus dem größeren Werkzeugmagazinteil 62, das sich im Wesentlichen oberhalb, leicht nach links versetzt zur Werkzeugspindel 2 befindet, einzulagern oder abzuholen. Auch hier ist der Tragarm 30" fast vollständig gestreckt, ähnlich wie in der dritten Tragarmstellung 30"', bei welchem angedeutet ist, dass die Werkzeugwechselvorrichtung mit dem anderen, kleineren Werkzeugmagazinteil 61 zum Be- oder Entladen von Bearbeitungswerkzeugen zusammenwirkt.

Auch dieses Werkzeugmagazinteil 61 befindet sich oberhalb des Grundgelenkes 37, also oberhalb der Werkzeugwechselvorrichtung 3, rechts neben dem deutlich größeren, weil mit größerem Durchmesser ausgestatteten zweiten Werkzeugmagazinteil 62.

Das Grundgelenk 37 definiert eine Grundachse 36, um welche der Tragarm 30 um den Grundkörper 35 verschwenkbar ist.

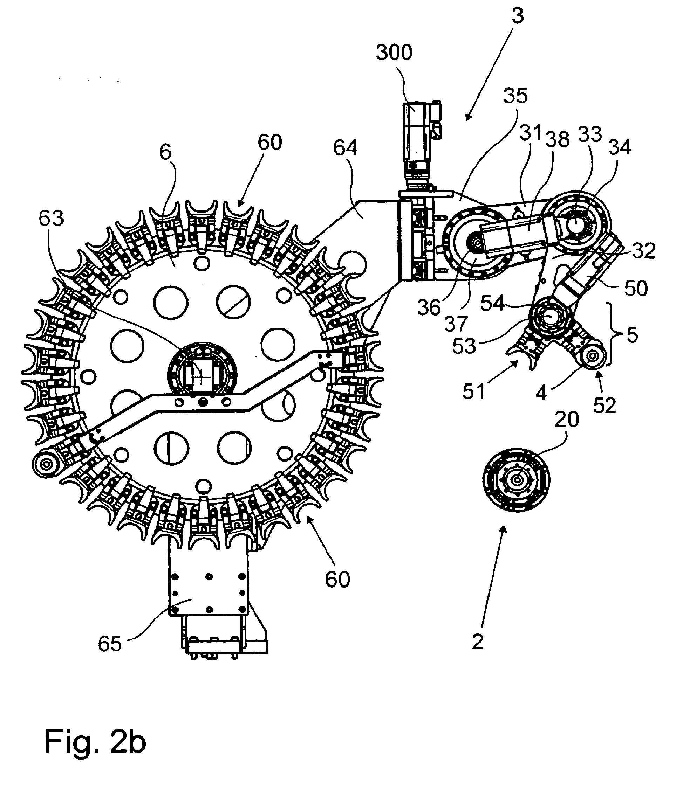

In Fig. 2b ist eine vereinfachte, schematische Darstellung der erfindungsgemäßen Werkzeugmaschine gezeigt. Zu beachten ist, dass das Werkzeugmagazin 6 in der hier gezeigten Darstellung neben der Werkzeugspindel 2 angeordnet ist. Die Werkzeugspindel 2 ihrerseits befindet sich im Wesentlichen unterhalb der Werkzeugwechselvorrichtung 3.

Das Werkzeugmagazin 6 wie auch die beiden Werkzeugmagazinteile 61, 62 sind als Scheibenmagazin ausgebildet und um eine Zentralachse 63 drehbar. Die Zentralachse 63 ist parallel zur Spindelachse 20.

Das als Scheibenmagazin ausgestaltete Werkzeugmagazin 6 nach Fig. 2b besitzt an seinem Umfang eine Vielzahl von Lagerplätzen 60 für die verschiedenen Bearbeitungswerkzeuge 4. Üblicherweise sind nicht alle Lagerplätze 60 belegt, um Platz für die Aufnahme von aus der Werkzeugspindel 2 ausgewechselten Bearbeitungswerkzeugen 4 oder neu in die Werkzeugmaschine eingegebener Bearbeitungswerkzeuge 4 zur Verfügung zu stellen.

Fig. 2a zeigt in einer dreidimensionalen Ansicht die Situation nach Fig. 2b, wobei hier deutlich wird, dass auch das Werkzeugmagazin 6 in dem hier gezeigten Ausführungsbeispiel aus zwei hintereinander angeordneten Werkzeugmagazinteilen 61, 62 besteht. Die jeweilige Zentralachse der beiden ebenfalls als Scheiben ausgebildeten Werkzeugmagazinteile 61, 62 fallen zusammen. Auch die Werkzeugmagazinteile 61, 62 besitzen Lagerplätze 60.

Dabei befinden sich die beiden Werkzeugmagazinteile auf einer gemeinsamen, die Zentralachse 63 aufnehmende Strebe, an der sich ein gemeinsamer Träger 64 radial, schräg nach oben heraus erstreckt, an welchem sich an seinem äußeren Ende die Werkzeugwechselvorrichtung 3 anschließt.

Die gesamte integrale Baueinheit von Werkzeugmagazin 6 und Werkzeugwechselvorrichtung 3 wird durch das Sockelteil 65 in geeigneter Weise in der Werkzeugmaschine 1, zum Beispiel an dessen Maschinengestell 10 oder Maschinenrahmen angeschlossen.

In Fig. 2b sind die verschiedenen Elemente des Tragarmes 30 gut erläuterbar. Der Werkzeugträger 5 besitzt zwei Werkzeugaufnahmen 51, 52, wobei in der zweiten Werkzeugaufnahme 52 bereits ein Bearbeitungswerkzeug 4 für einen Wechselprozess an der Werkzeugspindel 2 vorgehalten ist.

Die andere Werkzeugaufnahme 51 ist leer und dient zur Aufnahme des auf der Werkzeugspindel 2 eingespannten, auszuwechselnden Bearbeitungswerkzeuges 4' (Fig. 2a). Die beiden Werkzeugaufnahmen 51, 52 erstrecken sich radial bezüglich der Trägerachse 53. Dabei ist der Werkzeugträger 5 über das Trägergelenk 54 an dem äußeren Ende des Tragarmes 30 angeschlossen. Die Winkellage der beiden Werkzeugaufnahmen 51, 52 bezüglich der Trägerachse 53 zueinander ist starr, für eine Drehbewegung der Werkzeugaufnahmen 51, 52 um die Trägerachse 53 dient ein Antrieb 50.

Der Antrieb 50 bewirkt, dass bei dem Einwechsel- beziehungsweise Auswechselvorgang das auszuwechselnde Bearbeitungswerkzeug, nachdem es in die anfänglich leere Werkzeugaufnahme 51 eingesetzt ist, weggeschwenkt wird, um so gleichzeitig das einzuwechselnde Bearbeitungswerkzeug 4 in die Einsetzposition relativ zur Werkzeugspindel 2 zu bringen.

Wie bereits mehrfach geschildert, besteht der Tragarm 30 aus mehreren Gliedern 31, 32. In dem hier gezeigten Ausführungsbeispiel sind zwei Glieder 31, 32 vorgesehen. Die beiden Glieder 31, 32 sind über das Knickgelenk 34 miteinander verbunden, die Winkelstellung der beiden Glieder 31, 32 zueinander bezüglich der Knickachse 33 ist durch den Antrieb 38 verstell- und einstellbar. Die Anordnung ist dabei so gewählt, dass das zweite Glied 32, das den Werkzeugträger 5 trägt und das erste Glied 31 über das Grundgelenk 37 mit dem Grundkörper 35 gelenkig verbunden ist. Rückseitig, in Fig. 2b beziehungsweise 2a verdeckt, befindet sich ein weiterer Antrieb, um die Winkellage des ersten Gliedes 31 relativ zum Grundkörper 35 zu verändern und einzustellen.

Der Grundkörper 35 ist in einer ersten erfindungsgemäßen Variante in der Werkzeugmaschine 1 feststehend ausgebildet, in dem insbesondere in Fig. 2a gezeigten Ausführungsbeispiel allerdings ist der Grundkörper 35 schlittenartig realisiert und auf einer Führung 39 längsbeweglich positionierbar realisiert. Dabei ist die Orientierung der Führung 39 parallel zur Zentralachse 63 beziehungsweise der Spindelachse 20 oder auch der Knickachse 33 oder Grundachse 36. Durch einen Antrieb 300 ist der Grundkörper 35 auf der Führung 39 bewegbar und positionierbar.

Geschickterweise ist als Antrieb 300, 38, 50 ein Elektromotor, gegebenenfalls mit Getriebe vorgesehen.

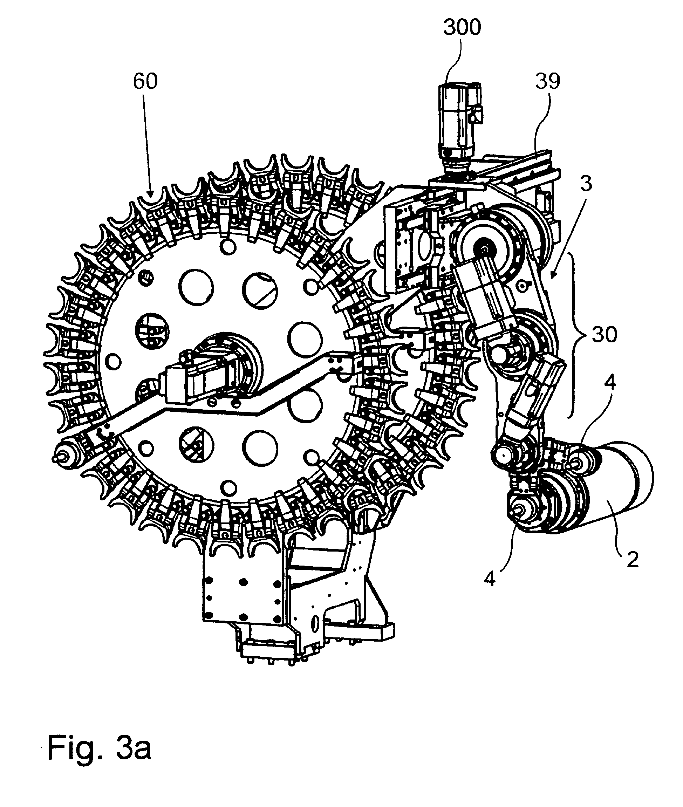

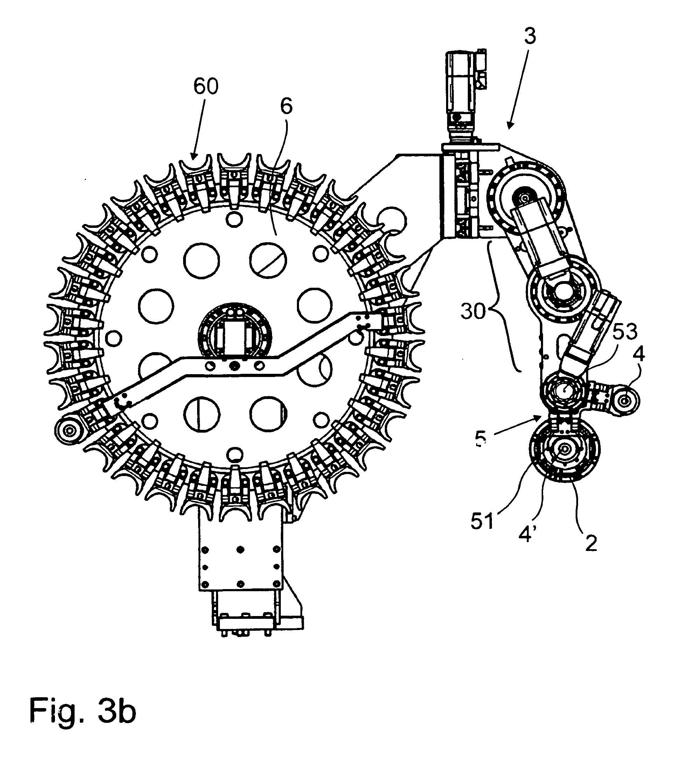

In Fig. 3a, 3b ist der Werkzeugwechselprozess an der Spindel 2 zu einem etwas späteren Zeitpunkt dargestellt. Fig. 3a, 3b entsprechen insofern dem in Fig. 2a, 2b Erwähnten, auf Wiederholungen wird in diesem Bereich verzichtet.

Es ist gut zu erkennen, dass der Tragarm 30 in der Stellung nach Fig. 3a, 3b fast vollständig gestreckt ist und die noch leere Werkzeugaufnahme 51 des Werkzeugträgers 5 das auszutauschende Bearbeitungswerkzeug 4' gerade aufnimmt. Nachdem das Bearbeitungswerkzeug 4' aus dem Spindelkopf der Werkzeugspindel 2 entnommen ist, erfolgt eine Schwenkbewegung des Werkzeugträgers 5 in Uhrzeigerrichtung um die Trägerachse 53 um circa 90° (entspricht dem angulären Abstand der beiden Werkzeugaufnahmen 51, 52 relativ zu der Trägerachse 53), um so das in der zweiten Werkzeugaufnahme 52 vorgehaltene Bearbeitungswerkzeug 4 in die Werkzeugspindel 2 einzusetzen.

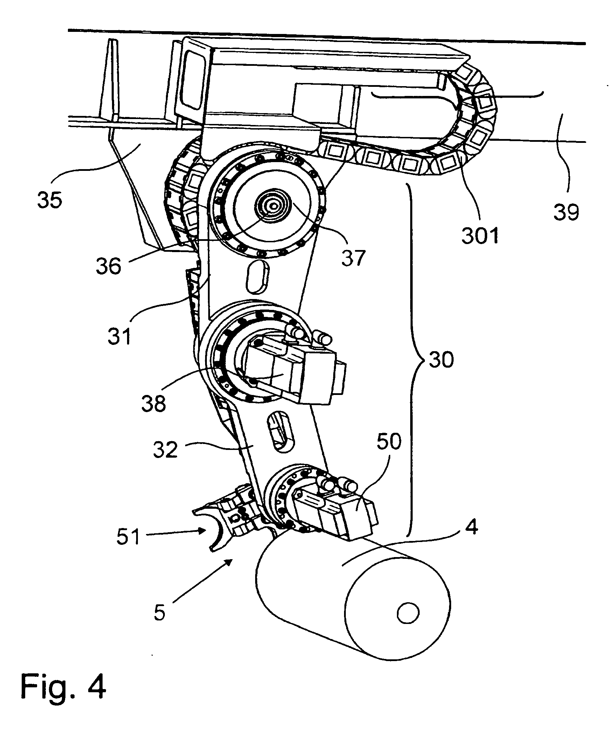

Fig. 4 zeigt in einer Detailvergrößerung nochmals die Werkzeugwechselvorrichtung 3, wie sie bereits exemplarisch mit Hilfe von Fig. 2b beziehungsweise Fig. 2a beschrieben worden ist.

Die Stromübertragung für die Antriebsmotoren 38 und 50 sowie auch die Dateninformationsleitungen für die Informationsübertragung sind in einer sogenannten Energiekette 301 angeordnet, um einen beschädigungsfreien und zuverlässigen Betrieb zu erlauben. Dabei ist die Verwendung der Energiekette 301 insofern günstig, da der Tragarm eine Vielzahl von Positionen im Raum aufgrund der Abknickbarkeit seiner Glieder 31, 32 einnehmen kann, denen die Energiekette 301 problemlos zu folgen vermag.

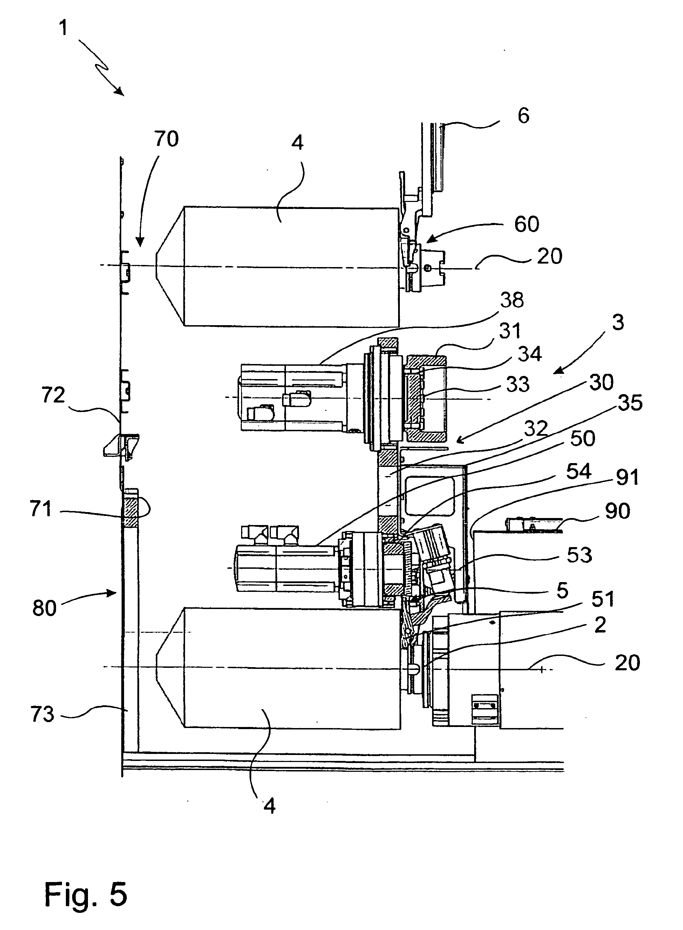

In Fig. 5 ist ein Ausschnitt der erfindungsgemäßen Werkzeugmaschine 1 schematisch und in der seitlichen Schnittdarstellung gezeigt. Teilweise erkennbar sind hier die verschiedenen Elemente der Werkzeugmaschine 1, beispielsweise ein Teil des Werkzeugmagazines 6, mit daran vorgesehenem Lagerplatz 60 für ein Bearbeitungswerkzeug 4, das in eine für die Werkzeugwechselvorrichtung 3 erreichbare Position verbracht wurde. Dies wurde durch Rotation des Werkzeugmagazines 6 realisiert.

Unterhalb des im Werkzeugmagazin 6 vorgehaltenen Bearbeitungswerkzeug 4, ist teilweise die Werkzeugwechselvorrichtung 3 erkennbar. Diese weist einen Tragarm 30 auf, der sich aus insgesamt zwei Gliedern 31, 32 zusammensetzt. Die Werkzeugwechselvorrichtung 3 setzt sich aus einem in Fig. 5 teilweise verdeckten Grundkörper 35, an dem sich über ein in Fig. 5 verdecktes Grundgelenk 37 der Tragarm 30 gelenkig anschließt. An dem vom Grundkörper 35 abgewandten Ende des Tragarmes 30, befindet sich der Werkzeugträger 5. Dieser ist in Fig. 5 beim Einsatz des Bearbeitungswerkzeuges 4 in die Werkzeugspindel 2 dargestellt.

Der Tragarm 30 besteht im Ausführungsbeispiel der Fig. 5 aus zwei, durch ein Knickgelenk 34 miteinander verbundenen Gliedern 31, 32. Der Werkzeugträger 5 wiederum ist über ein Trägergelenk mit dem zweiten Glied 32 des Tragarmes 30 verbunden. An den Gelenken 34 angeordnet befinden sich die Antriebe 38, 50 für die Bewegung der Werkzeugwechselvorrichtung 3. Diese sind im Ausführungsbeispiel unmittelbar auf den Achsen, das heißt der Knickachse 33 des Tragarmes 30 beziehungsweise der Trägerachse 53 des Werkzeugträgers 5 angeordnet und als Rotationsantriebe 38, 50 ausgebildet. Die Rotationsantriebe 38, 50 erlauben somit eine stets relativ zur Werkzeugspindel 2 gesehen optimale Positionierung des Werkzeugträgers 5 beziehungsweise der gesamten Werkzeugwechselvorrichtung 3. Ebenfalls garantieren die Rotationsantriebe 38, 50 ein präzises und zügiges Positionieren des Werkzeugträgers 5. Hierdurch kann zum Einen ein Bearbeitungswerkzeug 4 aus dem Werkzeugmagazin 6 entnommen und zum Anderen hochpräzise in die Werkzeugspindel 2 eingesetzt werden.

Die Werkzeugspindel 2 ist entlang mehrerer Achsen 20 bewegbar und positionierbar. In Fig. 5 ist hiervon lediglich die Spindelachse 20 dargestellt. Für den Bearbeitungsprozess ist die Werkzeugspindel 2 beziehungsweise das daran angeordnete Bearbeitungswerkzeug 4 entlang der Spindelachse 20 in einen Bearbeitungsraum 80 einführbar. Dieser Bearbeitungsraum schließt sich im Ausführungsbeispiel der Fig. 5 links an den Werkzeugwechselraum 70 an. In diesem Werkzeugwechselraum 70 findet der eigentliche Austausch von Bearbeitungswerkzeugen 4 statt. Hierzu wird die Werkzeugspindel 2 entlang der Spindelachse 20 gegenüber dem Bearbeitungsraum 80 zurückgezogen und in den Werkzeugwechselraum 70 verbracht. Hernach greift der Werkzeugträger 5 das an der Spindel 2 angeordnete Bearbeitungswerkzeug 4, entnimmt dieses und ersetzt es durch ein ebenfalls über den Werkzeugträger 5 herangeführtes weiteres Bearbeitungswerkzeug 4. Durch die in Fig. 5 angedeutete Ausführung der Werkzeugmaschine 1 wird eine räumliche Trennung von Werkzeugwechselraum 70 und Bearbeitungsraum 80 erreicht. Die Werkzeugwechselvorrichtung 3 befindet sich hierbei im Werkzeugwechselraum 70, wodurch eine Ausführung des Bearbeitungsraumes 80 mit relativ kleinem Volumen realisiert werden kann. Der Bearbeitungsraum 80 muss lediglich das Bearbeitungswerkzeug 4 beziehungsweise den das Bearbeitungswerkzeug 4 tragenden Teil der Werkzeugspindel 2 und das zu bearbeitende Werkstück (nicht dargestellt) aufnehmen. Hierdurch kann eine besonders kompakte Bauweise der Werkzeugmaschine 1 beziehungsweise des Bearbeitungsraumes 80 erreicht werden, die eine Reihe von Vorteilen, insbesondere bei der Reinigung des Werkstückes beziehungsweise der Abfuhr der während der Bearbeitung entstehenden Späne oder Stäubl ermöglicht.

Im Bearbeitungszustand befindet sich der in Fig. 5 innerhalb des Werkzeugwechselraumes 70 dargestellte Teil der Werkzeugspindel 2 beziehungsweise das Bearbeitungswerkzeug 4 in dem Bearbeitungsraum 80. Um einen räumlichen Abschluss der Werkzeugspindel 2 gegenüber dem Werkzeugwechselraum 70 beziehungsweise der darin positionierten Werkzeugwechselvorrichtung 3 durchführen zu können, ist eine Abdeckung 90 vorgesehen, die in den Werkzeugwechselraum 70 eingeschoben werden kann und dabei den Teil der Werkzeugspindel 2 umschließt, der sich bei der Bearbeitung im Werkzeugwechselraum 70 befindet. Die Abdeckung 90 kann beispielsweise nach Art einer Haube ausgestaltet sein und simultan mit der Verschiebung der Werkzeugspindel 2 entlang der Spindelachse 20 verschoben werden. In der den Werkzeugwechselraum 70 gegenüber dem Bearbeitungsraum 80 abteilenden Trennwand 72 ist eine Aufnahme 71 vorgesehen, in die der vordere Rand 91 der Abdeckung 90 eingreift, um einen dichten Abschluss zwischen Abdeckung 90 und Trennwand 72 sicherzustellen. Dieser dichte Abschluss verhindert das Austreten, beispielsweise von Spülflüssigkeit, Spänen oder Stäuben aus dem Bearbeitungsraum 80 in den Werkzeugwechselraum 70. Insgesamt wird somit während der Bearbeitung ein Abschluss des Bearbeitungswerkzeuges 4 und des Bearbeitungsraumes 80 gegenüber dem Werkzeugwechselraum 70 und insbesondere der darin angeordneten Werkzeugwechselvorrichtung 3 erreicht.

Während der Bearbeitung bleibt die Werkzeugwechselvorrichtung 3 beziehungsweise der daran angeordnete Werkzeugträger 5 in dem Werkzeugwechselraum 70 positioniert. Als Position für den Werkzeugträger 5 wird dabei ein in unmittelbarer Nähe zur Werkzeugspindel 2 beziehungsweise zu der Position, in der sich das in den Werkzeugwechselraum 70 eingezogene Bearbeitungswerkzeug 4 befindet, gewählt. Durch die unmittelbare Nähe zwischen Werkzeugträger 5 und Werkzeugspindel 2 kann ein Werkzeugwechsel zügig durchgeführt werden. Aufgrund der äußerst präzise betätigbaren Rotationsantriebe 38, 50, beispielsweise schnittweise oder kontinuierlich die am Tragarm 30 der Werkzeugwechselvorrichtung 3 vorgesehen sind und in Verbindung mit einer entsprechenden Steuerung für die Werkzeugmaschine 1, kann der Werkzeugträger 3 der Bewegung der Werkzeugspindel 2, die nicht nur in Richtung der Spindelachse 20, sondern auch parallel zur Trennwand 72 bewegbar ist, durchgeführt werden. Somit kann eine optimale Positionierung des Werkzeugträgers 5 relativ zur Werkzeugspindel 2 erfolgen, die einen zügigen Angriff des Werkzeugträgers 3 an der Werkzeugspindel 2 beim Werkzeugwechsel zulässt.

In der Trennwand 72 ist eine Durchgangsöffnung 73 für das Bearbeitungswerkzeug 4 beziehungsweise die das Bearbeitungswerkzeug 4 tragende Werkzeugspindel 2 vorgesehen, sodass das Bearbeitungswerkzeug 4 problemlos in den Bearbeitungsraum 80 eingeschoben werden kann. Die Durchgangsöffnung 73 ist, um einen dichten Abschluss des Bearbeitungsraumes 80 gegenüber dem Werkzeugwechselraum 70 zu gewährleisten, mit flexiblen Durchlasselementen (nicht dargestellt) versehen, die eine Bewegung der Werkzeugspindel 2 beziehungsweise des Bearbeitungswerkzeuges 4 parallel zur Trennwand erlauben.

Die jetzt mit der Anmeldung und später eingereichten Ansprüche sind Versuche zur Formulierung ohne Präjudiz für die Erzielung weitergehenden Schutzes.

## Patentansprüche

1. Werkzeugmaschine, welche eine Werkzeugspindel (2) umfasst und durch eine in oder an der Werkzeugmaschine (1) vorgesehene Werkzeugwechselvorrichtung (3) mindestens ein Bearbeitungswerkzeug (4) in die Werkzeugspindel (2) einbeziehungsweise auswechselbar ist, und die Werkzeugspindel (2) das Bearbeitungswerkzeug (4) für Bearbeitungszwecke um eine Spindelachse (20) in Rotation versetzt und die Werkzeugwechselvorrichtung (3) einen aus mindestens zwei Gliedern (31, 32) bestehenden Tragarm (30) aufweist und der Tragarm (30) über ein Trägergelenk (54) an einem äußeren Ende des Tragarmes (30) angeschlossen ein das Bearbeitungswerkzeug (4) aufnehmenden Werkzeugträger (5) hält, und zumindest zwei Glieder (31, 32) durch ein eine Knickachse (33) aufweisendes Knickgelenk (34) gelenkig miteinander verbunden sind, **dadurch gekennzeichnet, dass** die Werkzeugwechselvorrichtung (3) an den jeweiligen Gelenken (34, 37, 54) als NC-gesteuerter Rotationsantrieb ausgebildete Antriebe (38, 50) für die Bewegung der Glieder (31, 32) beziehungsweise des Werkzeugträgers (5) aufweist und über die Antriebe (38, 50) die Winkellage der Glieder (31, 32) zueinander bezüglich der Knickachse (33) und die Winkellage des ersten Gliedes (31) relativ zum Grundkörper (35) verstell- oder einstellbar ist und der Werkzeugträger (5) beziehungsweise die Werkzeugaufnahme/n (51, 52) senkrecht zur Spindelachse (20) um die Trägerachse (53) drehbar ist, ein Bearbeitungsraum (80) und ein räumlich durch eine Trennwand (72) getrennter Werkzeugwechselraum (70) für die Werkzeugwechselvorrichtung (3) vorgesehen ist und die Werkzeugspindel (2) und/oder das Bearbeitungswerkzeug (4) zum Werkzeugwechsel aus dem Bearbeitungsraum (80) in den Werkzeugwechselraum (70) bewegbar, insbesondere verschiebbar ist

2. Werkzeugmaschine nach Anspruch 1, **dadurch gekennzeichnet, dass** wenigstens einer der Antriebe (38, 50) als Rotationsantrieb, insbesondere als positionsgesteuerter beziehungsweise NC gesteuerter Rotationsantrieb (38,50) ausgebildet ist.

3. Werkzeugmaschine nach einem der vorhergehenden Ansprüche, **dadurch gekennzeichnet, dass** das Bearbeitungswerkzeug (4) parallel zur Trennwand (72) verfahrbar ist, insbesondere wobei in der Trennwand (72) ein durch flexible Elemente verschließbarer Durchbruch (74) vorgesehen ist.

4. Werkzeugmaschine nach einem der vorhergehenden Ansprüche, **gekennzeichnet durch** eine Abdeckung (90), wobei die Abdeckung (90) als eine die Werkzeugspindel (2) im Werkzeugwechselraum (70) zumindest abschnittsweise umschließende, die Werkzeugspindel (2) zum Werkzeugwechsel freigebende Haube ausgebildet ist und/oder die Abdeckung (90) relativ zur Spindelachse (20) verschiebbar ausgebildet ist und/oder an der Trennwand (72) ein Anschlag oder eine Aufnahme (71) für den dichten Anschluss der Abdeckung (90) vorgesehen ist.

5. Werkzeugmaschine nach einem der vorhergehenden Ansprüche, **dadurch gekennzeichnet, dass** während des Bearbeitungseinsatzes des von der Werkzeugspindel (2) gehaltenen Bearbeitungswerkzeuges (4) zumindest der Werkzeugträger (5) in der Werkzeugmaschine (1), insbesondere im Werkzeugwechselraum (70) verbleibt und/oder die Werkzeugwechselvorrichtung (3) beziehungsweise der Werkzeugträger (5) während der Bearbeitung im Werkzeugwechselraum (70), insbesondere benachbart zu dem in den Werkzeugwechselraum (70) bewegten Bearbeitungswerkzeug (4) beziehungsweise Werkzeugspindel positionierbar ist, wobei ein insbesondere gleichbleibender Abstand zwischen Bearbeitungswerkzeug (4) und Werkzeugwechselvorrichtung (3) beziehungsweise Werkzeugträger (5) vorgesehen ist.

6. Werkzeugmaschine nach einem der vorhergehenden Ansprüche, **dadurch gekennzeichnet, dass** die Werkzeugspindel (2) relativ zur Spindelachse (20), insbesondere horizontal bewegbar ausgebildet ist, wobei die Bewegung der Werkzeugwechselvorrichtung (3) und/oder der Werkzeugträger anhand der Bewegung der Werkzeugspindel (2) einstell- oder verstellbar ist und/oder die Werkzeugwechselvorrichtung (3) und/oder die Werkzeugspindel (2) in einem Maschinengestell (10) angeordnet ist und/oder die Werkzeugwechselvorrichtung (3) von dem Maschinengestell (10) gehalten ist und/oder die Werkzeugwechselvorrichtung (3) einen Grundkörper (35) aufweist, an welchem der Tragarm (30) an einem eine Grundachse (36) aufweisendes Grundgelenk (37) gelenkig beziehungsweise drehbar angeordnet ist und/oder eine Schwenkbewegung des Gliedes (31, 32) beziehungsweise des Werkzeugträgers (5) vorgesehen ist und/oder der Grundkörper (35) in der Werkzeugmaschine (1) feststehend ausgebildet ist oder der Grundkörper (35) entlang einer Führung (39), zumindest in einer Raumrichtung beweglich und positionierbar ist.

7. Werkzeugmaschine nach einem der vorhergehenden Ansprüche, **dadurch gekennzeichnet, dass** der Werkzeugträger (5) gemeinsam um eine Trägerachse (53) verschwenkbare Werkzeugaufnahmen (51, 52) aufweist.

8. Werkzeugmaschine nach einem der vorhergehenden Ansprüche, **dadurch gekennzeichnet, dass** in der Werkzeugwechselstellung der Werkzeugmaschine (1) eine erste Werkzeugaufnahme (51) zunächst leer zur Aufnahme des von der Werkzeugspindel (2) auszuwechselnden Bearbeitungswerkzeuges (4') ist und die zweite Werkzeugaufnahme (52) das auf die Werkzeugspindel (2) einzuwechselnde Bearbeitungswerkzeug (4) trägt.

9. Werkzeugmaschine nach einem der vorhergehenden Ansprüche, **gekennzeichnet durch** eine zumindest paarweise parallele Anordnung von Grundachse (36), Knickachse (33), Trägerachse (53) und Spindelachse (20) zueinander.

10. Werkzeugmaschine nach einem der vorhergehenden Ansprüche, **dadurch gekennzeichnet, dass** in der Werkzeugmaschine (1) ein Werkzeugmagazin (6) mit einer Vielzahl von Lagerplätzen (60) für die Bearbeitungswerkzeuge (4) vorgesehen ist und/oder das Werkzeugmagazin (6) aus mindestens zwei nebeneinander oder hintereinander angeordneten Werkzeugmagazinteilen (61, 62) gebildet ist und/oder das Werkzeugmagazin (6) beziehungsweise das Werkzeugmagazinteil (61, 62) als Scheiben- oder Kettenmagazin ausgebildet ist.

11. Werkzeugmaschine nach einem der vorhergehenden Ansprüche, **dadurch gekennzeichnet, dass** der Grundkörper (35) parallel zur Spindelachse (20) und/oder rechtwinklig hierzu beweglich und positionierbar ist, insbesondere der Grundkörper (35) entlang einer Verbindungsachse der Werkzeugmagazinteile beweglich und positionierbar ist.

12. Werkzeugmaschine nach einem der vorhergehenden Ansprüche, **gekennzeichnet durch** eine Antriebssteuerung der Antriebe (38) zur Durchführung einer Achstransformation derart, dass eine Bewegung des Werkzeugträgers (5) im Raum **durch** eine entsprechende Überlagerung der **durch** die Antriebe (38) bewirkte Bewegung der Glieder (31, 32) vorgesehen ist.

13. Werkzeugmaschine nach einem der vorhergehenden Ansprüche, **dadurch gekennzeichnet, dass** das Werkzeugmagazin (6) und die Werkzeugwechselvorrichtung (5) an einem gemeinsamen Träger (64) angeordnet sind.

14. Werkzeugmaschine nach einem der vorhergehenden Ansprüche, **gekennzeichnet durch** eine in der Maschinensteuerung der Werkzeugmaschine (1) integrierte Steuerung der Werkzeugwechselvorrichtung (5).

15. Werkzeugmaschine nach einem der vorhergehenden Ansprüche, **gekennzeichnet durch** eine Werkzeugwechselschleuse (12) der Werkzeugmaschine (1), in welcher mindestens ein Halteplatz (13) für ein Bearbeitungswerkzeug (4) vorgesehen ist und der Tragarm (30) den Werkzeugträger (5) für werkzeugein- oder -ausschleusprozesse an den Halteplatz (13) bewegt.

## Claims

1. Machine tool comprising a machining spindle (2) and a machining tool changer device (3) located within or at the machine tool (1), able to exchange or to insert at least one machining tool (4) into the machining spindle (2) driving the machining tool (4) during the machining phase into a rotation around the spindle axe (20) and whereas the machining tool changer device (3) possesses a support arm (30) built of at least two links (31, 32) and supporting through a support articulation (54) at one of its ends a machining tool holder (5) whereas the two links (31, 32) are interconnected by a hinge joint (34) with a hinge axis (33), **characterized in that** the machining tool changer device (3) has at each joint (34, 37, 54) a drive (38, 50) built as a NC rotational drive, allowing to move the links (31, 32) and the machining tool holder (5) so that the drives (38, 50) modify and adjust the angle between the links (31, 32) and the hinge axis (33) as well as the angular position of the first link (31) against the basis body (35), whereas the machining tool holder (5)a and the machining tool receptor(s) (51, 52) rotate around a support axis (53) perpendicular to the spindle axis (20) and whereas a machining room (80) and, separated by a separating plate (72), a machining tool changer room (70) for the machining tool changer device (3) and whereas the machining spindle (2) and/or the machining tool (4) can be moved and in particular slided from the machining room (80) into the machining tool changer room (70).

2. Machine tool according to claim 1, **characterized in that** at least one of the drives (38, 50) is a rotational drive and in particular a position controlled rotational drive or a NC rotational drive (38, 50).

3. Machine tool according to one of the preceding claims, **characterized in that** the machining tool (4) can be moved parallel to the separating plate (72) and in particular in that the separating plate (72) has an opening (74) which can be closed by flexible elements.

4. Machine tool according to one of the preceding claims, **characterized by** a cover (90) configured as a hood enclosing at least partially the machining spindle (2) in the machining tool changer room (70) but leaving an access to the spindle (2) in order to allow the exchange of a machining tool and/or by a cover (90) configured to be mobile compared to the spindle axis (30) and/or in that a mechanical stop or a groove (71) is located at the separating plate (72) to achieve a tight connection with the cover (90).

5. Machine tool according to one of the preceding claims, **characterized in that**, during the machining use of the machining tool (4) maintained by the machining spindle (2), at least the tool holder (5) remains in the machine tool (1) and in particular in the machining tool changer room (70) and/or **in that**, during the machining phase, the machining tool changer device (3) and the machining tool holder (5) can be positioned and moved close to the machining tool (4) or the machining spindle (2) when it is moved into the machining tool changer room (70) whereas in particular a constant distance is foreseen between the machining tool (4) and the machining tool changer device (3) or the machining tool holder (5).

6. Machine tool according to one of the preceding claims, **characterized in that** the spindle (2) is configured mobile compared to the spindle axis (20) and in particular horizontally mobile with an adjustable or changeable movement of the machining tool changer device (3) and/or of the machining tool holder as a function of the movement of the machining spindle (2) and/or **in that** the machining tool changer device (3) and/or the machining spindle (2) are located in a machine frame (10) and/or **in that** the machining tool changer device (3) is maintained by the machine frame (10) and/or **in that** the machining tool changer device (3) comprises a basis body (35) on which a support arm (30) is maintained mobile and pivotable by a basis joint (37) with a basis axis (36) and/or **in that** a pivotal movement of the link (31, 32) or of the machining tool holder (5) is foreseen and/or **in that** the basis body (35) is immobilized in the machine tool (1) or **in that** the basis body (35) is mobile and can be positioned along a guidance (39) and at least in one spatial direction.

7. Machine tool according to one of the preceding claims, **characterized in that** the machining tool holder (5) comprises machining tool receptors (51, 52) pivoting together around a support axis (53).

8. Machine tool according to one of the preceding claims, **characterized in that** in a machining tool changer position of the machine tool (1) a first and empty machining tool receptor (51) awaits the machining tool (4') to be removed from the machining spindle whereas a second machining tool receptor (52) holds a machining tool (4) to be transferred to the machining spindle (2) during the machining tool changer.

9. Machine tool according to one of the preceding claims, **characterized by** a parallel configuration of at least one pair out of the basis axis (36), the hinge axis (33), the support axis (53) and the spindle axis (20).

10. Machine tool according to one of the preceding claims, **characterized in that** the machine tool (1) comprises a machining tool magazine (6) with many holders (60) for machining tools (4) and/or **in that** the machining tool magazine (6) consists of at least two parts of a machining tool magazine (61, 62) located side by side or one after the other and/or **in that** the machining tool magazine (6) or its parts (61, 62) are configured as magazine disks or magazine chains.

11. Machine tool according to one of the preceding claims, **characterized in that** the basis body (35) is mobile and can be positioned in a direction parallel and/or perpendicular to the spindle axis (20) and in particular in that the basis body (35) is mobile and can be positioned along an interconnection line between the parts of the machining tool magazine.

12. Machine tool according to one of the preceding claims, **characterized by** a control system of the drives (38) allowing to realize an axis transformation so that a movement of the machining tool holder (5) in the space is generated by an appropriate superposition of the individual movements of the links (31, 32), each produced by the drives (38).

13. Machine tool according to one of the preceding claims, **characterized in that** the machining tool magazine (6) and the machining tool changer device (3) are located at a common support (64).

14. Machine tool according to one of the preceding claims, **characterized by** a control of the machining tool changer device (3) integrated in the control system of the machine tool (1).

15. Machine tool according to one of the preceding claims, **characterized by** a machining tool changer lock (12) of the machine tool (1) in which exists at least one stopping space (13) for a machining tool (4) whereas the support arm (30) moves the machining tool holder (5) to this stopping space (13) during the machining tool introduction or exit process.

## Revendications

1. Machine-outil comprenant une broche d'usinage (2) congue pour entrainer l'outil d'usinage (4) dans un mouvement de rotation autour de l'axe de la broche d'usinage (20) lors de l'usinage et un dispositif de changement d'outils (3) situé sur ou à l'intérieur de la machine et destiné à insérer ou à échanger au moins un outil d'usinage (4) au niveau de la broche d'usinage (2) et comportant un bras de support (30) constitué d'au moins deux éléments (31, 32) liés entre eux de fagon mobile par une articulation pivotante (34) et un axe de pivotement (33), et un support d'outil (5) immobilisant l'outil d'usinage (4) et lié au bras de support (30) par une articulation de support (54) située à une des extrémités du bras de support (30), **caractérisée en ce que** le dispositif de changement d'outils (3) possède des commandes rotationnelles numériques (38, 50) à chacune des articulations (34, 37, 54) pour obtenir un mouvement des éléments (31, 32) et du porte-outil (5) et **en ce que** les commandes (38, 50) peuvent modifier et fixer la position angulaire entre l'axe de pivotement (33) et les deux éléments (31, 32) et la position angulaire entre le premier élément (31) et le châssis (35) et **en ce que** le porte-outil (5) ainsi que le ou les récepteur(s) (51, 52) peu(ven)t tourner autour de l'axe de support (53) perpendiculaire à l'axe de la broche d'usinage (20) et **en ce qu'**il existe un espace d'usinage (80) et, séparé par une paroi de séparation (72), un espace de changement d'outil (70) incluant le dispositif de changement d'outils (3) et **en ce que** la broche d'usinage (2) et/ou l'outil d'usinage (4) peut être déplacé et en particulier coulisser de l'espace d'usinage (80) vers l'espace de changement d'outil (70) dans le but de changer l'outil d'usinage.

2. Machine-outil selon la revendication 1, **caractérisée en ce qu'**au moins une des commandes (38, 50) est une commande rotationnelle et en particulier une commande rotationnelle (38, 50) à contrôle de position ou à contrôle numérique.

3. Machine-outil selon une des revendications précédentes, **caractérisée en ce que** l'outil d'usinage (4) peut être déplacé parallèlement à la paroi de séparation (72) et **en ce qu'**en particulier la paroi de séparation (72) comporte une ouverture (74) pouvant être fermée par des éléments mobiles.

4. Machine-outil selon une des revendications précédentes, **caractérisée par** un élément de protection (90) configuré comme un capot entourant au moins partiellement la broche d'usinage (2) à l'intérieur de l'espace de changement d'outils (70) en laissant l'accès à la broche d'usinage pour le changement de l'outil d'usinage et/ou en ce que l'élément de protection (90) peut être déplacé par rapport à l'axe de la broche d'usinage (20) et/ou en ce que la paroi de séparation (72) prévoit une butée ou un rebord de réception (71) pour la réalisation d'un raccord étanche avec l'élément de protection (90).

5. Machine-outil selon une des revendications précédentes, **caractérisée en ce qu'**au moins le porte-outil (5) reste à l'intérieur de la machine-outil (1) et en particulier à l'intérieur de l'espace de changement d'outils (70) lorsque l'outil d'usinage (4) maintenu par la broche d'usinage (2) est utilisé pour un usinage et/ou **en ce que** lors de l'usinage le dispositif de changement d'outils (3), c'est-à-dire le porte-outil (5) peut être positionné à l'intérieur de l'espace de changement d'outil (70) et en particulier à une distance proche par rapport à l'outil d'usinage (4) et la broche d'usinage (2) dont l'ensemble est déplacé vers l'espace de changement d'outil (70) et en particulier à une distance constante entre l'outil d'usinage (4) et le dispositif de changement d'outils (3) ou le porte-outil (5).

6. Machine-outil selon une des revendications précédentes, **caractérisée en ce que** la broche d'usinage (2) est configurée de fagon à permettre un déplacement par rapport à l'axe de la broche d'usinage (20) et en particulier un déplacement horizontal avec la possibilité d'ajuster ou de modifier le mouvement du dispositif de changement d'outils (3) et/ou du porte-outil en fonction du mouvement de la broche d'usinage (2) et/ou **en ce que** le dispositif de changement d'outils (3) et/ou la broche d'usinage (2) sont situés dans un châssis de machine (10) et/ou **en ce que** le dispositif de changement d'outils (3) est maintenu par le châssis de machine (10) et/ou **en ce que** le dispositif de changement d'outils (3) possède une base (35) sur laquelle le bras de support (30) est fixé de fagon articulée ou pivotante via une articulation de base (37) autour d'un axe de base (36) et/ou **en ce qu'**un mouvement de pivotement du élément (31, 32) ou du porte-outil (5) est prévu et/ou **en ce que** la base (35) est immobile dans la machine-outil (1) ou **en ce que** la base (35) est mobile et peut être positionnée le long d'un guidage (39) dans au moins une direction.

7. Machine-outil selon une des revendications précédentes, **caractérisée en ce que** le porte-outil (5) comporte des éléments de réception (51, 52) pour des outils d'usinage qui pivotent ensemble autour d'un axe de support (53).

8. Machine-outil selon une des revendications précédentes, **caractérisée en ce qu'**en position de changement d'outils de la machine-outil (1) un premier récepteur d'outils (51) est d'abord vide et prêt à recevoir l'outil à changer (4') de la broche d'usinage (2) et **en ce qu'**un deuxième récepteur d'outils (52) porte l'outil (4) de remplacement.

9. Machine-outil selon une des revendications précédentes, **caractérisée par** une configuration parallèle d'au moins deux axes dont l'axe de base (36), l'axe de pivotement (33) l'axe de support (53) ou l'axe de la broche d'usinage (20).

10. Machine-outil selon une des revendications précédentes, **caractérisée en ce qu'**il existe un magasin d'outil (6) à l'intérieur de la machine-outil (1) comportant un grand nombre de récepteurs (60) pour des outils d'usinage (4) et/ou en ce à que le magasin d'outils (6) consiste en au moins deux parties de magasin (61, 62) situé côte à côte ou l'un devant l'autre et/ou **en ce que** le magasin d'outils (6) ou les parties de magasin (61, 62) ont une configuration d'un magasin à disques ou à chaînes.

11. Machine-outil selon une des revendications précédentes, **caractérisée en ce que** la base (35) peut être déplacée et positionnée parallèlement et/ou perpendiculairement à l'axe de la broche d'usinage (20) et en particulier **en ce que** la base (35) peut être déplacée et positionnée le long d'un axe de liaison entre les parties du magasin d'outils.

12. Machine-outil selon une des revendications précédentes, **caractérisée par** un système de contrôle des commandes (38) permettant la réalisation d'un mouvement le long d'un axe afin de permettre un mouvement d'un récepteur d'outil (5) dans l'espace par une superposition appropriée des mouvements des éléments (31, 32) entrannés par les commandes (38).

13. Machine-outil selon une des revendications précédentes, **caractérisée en ce que** le magasin d'outils (6) et le dispositif de changement d'outils (3) sont maintenus par un même support (64).

14. Machine-outil selon une des revendications précédentes, **caractérisée par** un système de contrôle du dispositif de changement d'outils (3) intégré dans le système de contrôle de la machine.

15. Machine-outil selon une des revendications précédentes, **caractérisée par** un sas destiné au changement d'outils (12) de la machine-outil (1) dans laquelle existe au moins une place d'arrêt (13) pour un outil d'usinage (4) au niveau duquel le bras de support (30) amène le support d'outil (5) afin de rentrer ou de sortir un outil d'usinage.
